# EUROPEAN PATENT APPLICATION

(11) **EP 3 738 930 A1**
(43) Date of publication of application: **18.11.2020**
(21) Application number: 19175221.1
(22) Date of filing: 17.05.2019
(51) Int. Cl.: C02F 1/00, C02F 1/28

(54) **FILTER CARTRIDGE**

(71) Applicant: Brita GmbH, 65232 Taunusstein (DE)
(72) Inventor: BUNNEMANN, Phillip, 65232 Taunusstein (DE); SOBEK, Nicoletta, 65232 Taunusstein (DE)

(57) **Abstract**

Water filtration device comprising an inlet funnel (63) with a seat (61) for a filter cartridge (1) and with a gravity-operated filter cartridge (1) for treating water, the filter cartridge (1) having a housing (3) with an inner volume (11) and water treatment media located in the inner volume (11), the housing (3) having a circumferential wall (5), at least one water inlet (9) in an upper region and at least one water outlet (43) in a lower region, the wall (5) having a circumferential main portion (17) and a circumferential sealing portion (21), the sealing portion (21) having a larger maximum horizontal cross-section than the main portion (17), a porous coal disc (45) being located at least partially inside the housing (3), the coal disc (45) circumferentially contacting the sealing portion (21) from inside the housing (3), thereby stiffening the housing (3) against forces coming from outside the housing (3), a circumferential sealing area (51) being located on the outside of the sealing portion (21), the seat (61) of the inlet funnel (63) having a circumferential sealing element that is in contact with the circumferential sealing area (51) of the sealing portion (21) when the filter cartridge (1) is inserted into the seat (61) of the inlet funnel (63).

## Description

The present invention relates to a filter cartridge, a water filtration device and a method for manufacturing a filter cartridge.

Filtration devices of the above-referenced kind are being used as water filters for everyday use in households, which is why they are also called table water filters. They are primarily used for clearing tap water of unwanted substances. Among these substances are chloride and hardness builders such as calcium and magnesia, but also lead, which finds its way into tap water through the use of lead pipes, especially in older houses.

Table water filters are gravity-operated. Besides the pouring of tap water into the water filter, no work is necessary for filtering the water. The water simply flows downwards through a filter cartridge and into a receptacle for the filtered water due to the gravitational force. The filter cartridge is accordingly also gravity-operated.

One filtration device known from EP 1 230 166 B1 comprises an inlet funnel having a bottom wall, which is provided with an opening for a filter cartridge. The filter cartridge is plugged into the opening, creating a seal between the opening and a sealing rim of the filter cartridge. In use, water is introduced into the inlet funnel from above and then flows into the filter cartridge through water inlets. Granular treatment media for the water is located inside of the filter cartridge. The treatment media usually comprises ion exchange resin and/or active coal, but other components may be used as treatment media as well. In the filter cartridge the water is treated and then exits the filter cartridge downwards through water outlets at the bottom of the filter cartridge. The filter cartridge is also provided with air outlets at its very top in order to allow air from inside the filter cartridge to exit the filter cartridge upwards at the beginning of the filtration process.

It is desired to provide a tight seal between the filter cartridge and the filtration device to ensure that all water inserted into the filtration device at the top flows through the filter cartridge. Tight seals can be achieved by using flexible sealing elements. Such sealing elements can be attached to either the inlet funnel of a filtration device or the filter cartridge. The counterpart should then be relatively rigid in order to provide an abutment for the sealing element.

Attaching the sealing element to the filter cartridge makes the manufacturing of the filter cartridges more expensive. Since the filter cartridges are replaced repeatedly, this is undesirable. Nevertheless, filter cartridges with integrally molded sealing elements are commonly known in the art. For example, according to the filtration device shown in EP 1 748 830 B9 the filter cartridge on one hand and the inlet funnel on the other are provided with corresponding fixing means for ensuring that a sealing rim of the filter cartridge comes into contact with an edge of the inlet funnel during insertion of the filter cartridge into the inlet funnel thereby making sure that a tight seal between the two is provided every time. However, it can be difficult for the consumer to position the fixing means correctly.

Attaching the sealing element to the inlet funnel on the other hand leads to the necessity of making the filter cartridge more rigid. Since filter cartridges are usually formed from plastic material, which is generally flexible, this has proven to be difficult. In addition, it is also desired to reduce the amount of plastic being used for ecological and economic reasons.

It is therefore the object of the invention to improve the sealing of filter cartridges in filtration devices.

This object is solved by a water filtration device according to claim 1.

The water filtration device comprises an inlet funnel with a seat for a filter cartridge and a gravity-operated filter cartridge for treating water. The filter cartridge has a housing with an inner volume and water treatment media located in the inner volume. The housing has a circumferential wall, at least one water inlet in an upper region and at least one water outlet in a lower region. The wall has a circumferential main portion and a circumferential sealing portion. The sealing portion has a larger maximum horizontal cross-section than the main portion. A porous coal disc is located at least partially inside the housing, the coal disc circumferentially contacting the sealing portion from inside the housing, thereby stiffening the housing against forces coming from outside the housing. A circumferential sealing area is located on the outside of the sealing portion. The seat of the inlet funnel has a circumferential sealing element that is in contact with the circumferential sealing area of the sealing portion when the filter cartridge is inserted into the seat of the inlet funnel.

The invention provides several benefits at once. First off, the flexible sealing element that abuts against the sealing area of the stiffened sealing portion provides a tight seal. Secondly, the sealing element is part of the inlet funnel so that the cost of the filter cartridges is not increased. The filter cartridge is also more rigid overall thanks to the stiffening coal disc, which improves the handling of the filter cartridge during insertion and removal. Finally, the wall thickness of the filter cartridge can be reduced so that smaller amounts of plastic need to be recycled after the filter cartridge is depleted.

The sealing portion is preferably located below the main portion. This way, the sealing portion is not only the one with the largest diameter but also the portion that is inserted first into the inlet funnel. Since the sealing area is located on the outside of said sealing portion the consumer is able to observe the seal creation directly. This improves both the likelihood of a functioning seal and the consumer satisfaction.

The circumferential wall is preferably closed at the top by a roof, the water inlet being located in the roof. This way water entering through the water inlet will pass through the complete inner volume of the housing before exiting at the water outlet, increasing the time the water spends in contact with the water treatment media.

In preferred embodiments, the wall further has a circumferential transitional portion providing a transition from the maximum horizontal cross-section of the main portion to the cross-section of the sealing portion.

At least one supplementary opening is preferably arranged in the transitional portion. When the sealing portion is located below the main portion, an annular space is formed between the filter cartridge and the inlet funnel radially outwards of the main portion and the transitional portion. Due to the supplementary opening in the transitional portion water present in said annular space may also enter into the filter cartridge and will not stay in said annular space, which would be undesirable.

In preferred embodiments, the porous coal disc contacts the transitional portion from inside the housing, in particular in a contact area that extends along a closed path around the central axis of the filter cartridge, i.e. a circumferential contact area. This way, water entering through the supplementary opening can flow directly into the coal disc, completely bypassing the main portion and any treatment media located therein. In many cases the treatment media arranged in the main portion is depleted more quickly than the coal disc. This is the case with ion exchange resin for example. In such cases it is very preferable to allow some of the water that is to be filtered to bypass the main portion as mentioned above to increase the overall lifetime of the filter cartridge. Since the coal disc is responsible for filtering out the most harmful substances such as pharmaceutical residues all water is freed from these substances. A bypass as described above only leads to a slight increase in water hardness of the treated water, which is acceptable in exchange for the longer lifetime.

The layout of the filter cartridge and the water filtration device therefore improves the handling of the filter cartridge during insertion and removal without affecting their functionality since water can exit the annular space.

The term "circumferential" is particularly to be understood relating to an axis of the filter cartridge parallel to the gravitational direction. Hence, if an element is "circumferential", the element preferably extends along a closed path around said axis. Thus, a "circumferential surface" does not necessarily mean a lateral surface but can also mean a ring shaped horizontal surface. The axis is preferably located in the center of the filter cartridge.

Ion exchange resin and active coal are among the most commonly used water treatment media types. Each type of water treatment media can serve different purposes. Ion exchange resin is used to reduce the hardness of the water by filtering out the hardness builders like calcium and magnesia. Active coal on the other hand is used to clear water of substances that have a negative impact on the water taste such as chloride and substances that are harmful to the health of the consumer such as lead.

The sealing portion of the circumferential wall preferably defines one single water outlet, wherein the porous coal disc comprising active coal is arranged in said water outlet. This makes it easier to arrange the coal disc in the housing reducing the manufacturing cost of the filter cartridge.

The coal disc preferably comprises active coal and a binder.

The water inlet, the water outlet and/or the air outlet may be covered by a cover such as a mesh, a permeable foil, a non-woven fabric and/or a grid located inside the housing for prohibiting the water treatment media from exiting the inner volume of the filter cartridge. The cover can be manufactured separately or can be formed in one piece with the housing. The coal disc can also fulfill said function, in particular in order to prohibit ion exchange resin from exiting the inner volume through the water outlet.

The coal disc is preferably fixated to the wall of the filter cartridge, in particular by welding or bonding. This prohibits the coal disc from falling out of the filter cartridge and improves the stiffening function of the coal disc. Alternatively or additionally the sealing portion can be provided with a lower rim below the coal disc, said lower rim projecting horizontally inwards, thereby holding the porous coal disc. Said rim also prohibits the coal disc from falling out. Additionally, said rim protects the consumer from sharp edges of the coal disc.

The coal disc may be provided with a cloth at its bottom side for prohibiting small pieces of coal from being washed away into the filtered water.

Some parts of the housing, in particular the wall, or the housing overall is preferably formed of plastic material, in particular polypropylene (PP) or polyethylene (PE).

The housing, in particular the main portion of the circumferential wall may be provided with one stacking element, in particular a stacking rib or a stacking step.

The sealing element is preferably a circumferential sealing ring having a sealing lip. Such a sealing lip creates a reliable seal with the circumferential sealing area of the filter cartridge.

Said sealing element is preferably formed from a material that is more elastic than the material of the sealing portion. For example, the sealing portion may be formed from polypropylene, polyethylene or similar materials having a Young's modulus of for example 1500 N/mm² while the sealing may be formed from ethylene propylene diene monomer rubber (EPDM), silicone or similar materials having a Shore A hardness of for example around 70.

As mentioned above water entering the filter cartridge through the supplementary opening is preferably not treated by treatment media present in the main portion. While this is acceptable for a certain amount of water, said amount must be chosen in relation to the amount of water passing the main portion. This can be accomplished by choosing the size and number of the supplementary openings and the water inlets or by choosing the vertical location of the water inlets. The at least one supplementary opening therefore preferably has a total cross-section A and the at least one water inlet has a total cross-section B, wherein 10 • A < B, in particular 30 • A < B. If more than one supplementary opening or water inlet is present, the total cross-section relates to the sum of all cross-section of the respective kind.

The coal disc preferably has a thickness D1 of 2 mm ≤ D1 ≤ 20 mm, in particular 4 mm ≤ D1 ≤ 10 mm. With a thickness below 4 mm the ability of the coal disc to filter out unwanted substances deteriorates until it is no longer acceptable below 2 mm. On the other hand increasing the thickness above 10 mm only leads to a slightly better filtering function. A thickness above 20 mm is considered to be disproportionate in comparison to the usual sizes of the filter cartridge.

Some parts of the housing, in particular the wall, or the housing overall preferably has a generally constant wall thickness. This facilitates the production of the filter cartridges. The term "generally constant wall thickness" in particular encompasses wall thicknesses that vary as a result of a manufacturing process, such as thermoforming.

Some parts of the housing, in particular the wall, or the housing overall preferably has a wall thickness D2 of 0.2 mm ≤ D2 ≤ 0.9 mm, in particular 0.3 mm ≤ D2 ≤ 0.6 mm. Previously filter cartridges oftentimes has wall thicknesses of around 1 mm. Due to the coal disc stiffening the housing of the filter cartridge the wall thickness can be reduced drastically so that the amount of plastic waste that needs to be recycled is reduced. Additionally, less material input is necessary during production of the filter cartridges.

The circumferential wall and the roof are preferably formed in one piece. This way wall and roof may be formed together in one single production process, reducing the cost of said process.

The housing is preferably formed by thermoforming. For a thermoforming process a flat piece of plastic material is heated which leads to an increase in the elasticity of the plastic material. The plastic material is then formed in a mold and cooled so that it retains its new form. The plastic material may be fed continuously from a coil. Thermoforming is a very cost-effective manufacturing process. Parts manufactured by thermoforming have a generally constant wall thickness. Alternatively, the filter cartridge may also be formed by other manufacturing processes, such as injection molding.

The housing preferably extends more in a first direction than in a second direction, both directions being perpendicular to the gravitational axis and to each other.

The roof is preferably provided with a handle. The consumer can handle the filter cartridge easily when the handle is located in an upper part such as the roof. The handle is preferably formed in one piece with the housing.

If a coal disc is located in the filter cartridge as described above, an upper volume is formed between the coal disc and the roof. Said upper volume is further defined by the main portion of the housing. In preferred embodiments granular water treatment media, in particular ion exchange resin, is located in the upper volume between the roof and the coal disc.

The inlet funnel preferably comprises a bottom rim at which the circumferential sealing element is arranged, in particular by a friction-fit connection. The inlet funnel may further comprises a clamping ring holding the sealing element to the bottom rim. The clamping ring itself may be connected to the bottom rim by a form-fit connection. The sealing element is thus prohibited from falling out of the groove even if forces larger than necessary are applied by the consumer during insertion and removal of the filter cartridge into the seat of the inlet funnel. The sealing element may also be attached to the bottom rim by multi-component injection molding of the sealing element together with the inlet funnel or similar manufacturing processes. In such a configuration the clamping ring may be omitted.

In advantageous embodiments a groove is located in the bottom rim and a tongue of the sealing element is placed in the groove for connecting the sealing element to the bottom rim. Such a groove and tongue connection makes it easier during the manufacturing process to position the sealing element correctly, which is advantageous for the later quality of the seal formed between the sealing element and the sealing area.

In preferred embodiments the water filtration device comprises a throttle, in particular a throttle plate, limiting the flow rate of water flowing out of the inlet funnel at its bottom end. The throttle plate is preferably fixated to or formed in one piece with the clamping ring. A throttle increases the time water spends inside the filter cartridge and therefore the treatment time of said water. The throttle plate has preferably one or more throttle outlets. To ensure that most of the water exiting the filter cartridge also exits the inlet funnel the throttle plate preferably has the shape of a funnel having one throttle outlet at its tip.

The water filtration device may further have a container on top of or into which the inlet funnel is arranged providing a receptacle for the filtered water.

The object of the invention is also solved by a gravity-operated filter cartridge for treating water having a housing with an inner volume and water treatment media located in the inner volume, the housing having a circumferential wall, at least one water inlet in an upper region and at least one water outlet in a lower region, the wall having a circumferential main portion and a circumferential sealing portion, the sealing portion having a larger maximum horizontal cross-section than the main portion, a porous coal disc being located at least partially inside the housing, the coal disc circumferentially contacting the sealing portion from inside the housing, thereby stiffening the housing against forces coming from outside the housing, and a circumferential sealing area being located on the outside of the sealing portion.

The gravity-operated filter cartridge according to the invention may have all of the features described above with regards to the filter cartridge of the water filtration device according to the invention.

The object of the invention is also solved by a method for manufacturing a filter cartridge with the following steps:
- providing a housing having a circumferential wall, at least one water inlet in an upper region and at least one water outlet in a lower region, the wall having a circumferential main portion and a circumferential sealing portion, the sealing portion having a larger maximum horizontal cross-section than the main portion, and a circumferential sealing area being located on the outside of the sealing portion,
- manufacturing a porous coal disc, and
- arranging the porous coal disc at least partially inside the housing so that the coal disc circumferentially contacts the sealing portion from inside the housing, thereby stiffening the housing against forces coming from outside the housing.

The housing is preferably formed by thermoforming. The water treatment media preferably comprises a coal disc and/or ion exchange resin.

The coal disc is preferably arranged in the sealing portion so that it circumferentially contacts the sealing portion from inside the housing. The coal disc may additionally be connected to the housing, e.g. by bending a lower edge of the sealing portion horizontally inwards forming a lower rim as described above, by molding the housing around the coal disc, by affixing the coal disc to the housing by adhesive bonding or similar techniques. These techniques may also be combined.

Most preferably, the sealing portion of the circumferential wall defines one single water outlet, ion exchange resin is inserted into the inner volume through the water outlet and a coal disc is then arranged in said water outlet so that it circumferentially contacts the sealing portion from inside the housing. The coal disc may then be connected to the housing as noted above.

The at least one water inlet, the at least one water outlet and/or the at least one supplementary opening is preferably formed by drilling, die cutting, lasing or the like. These elements may also be formed during the thermoforming process or during an injection molding process in which the housing is formed.

The invention will be described in detail with reference to the examples shown in the drawings, in which the following is shown:
- Figure 1: a filter cartridge according to the invention in a perspective drawing;
- Figure 2: the filter cartridge of figure 1 in a sectional side view;
- Figure 2a: Detail A of figure 2;
- Figure 3: a water filtration device according to the invention in a schematic side view;
- Figure 3a: Detail A of figure 3.

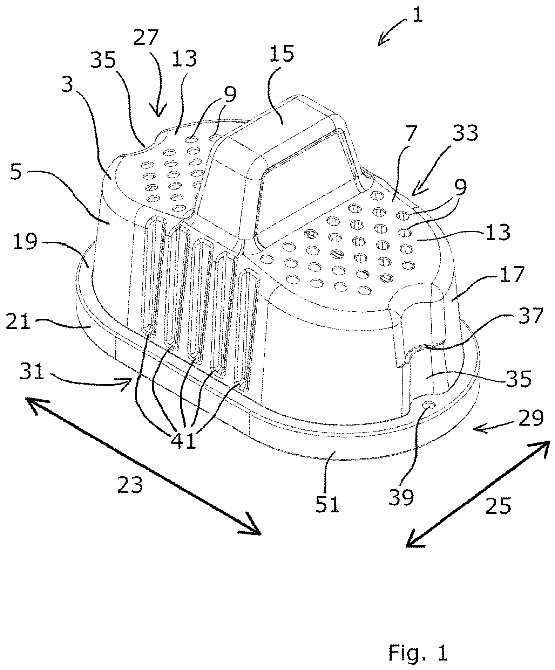

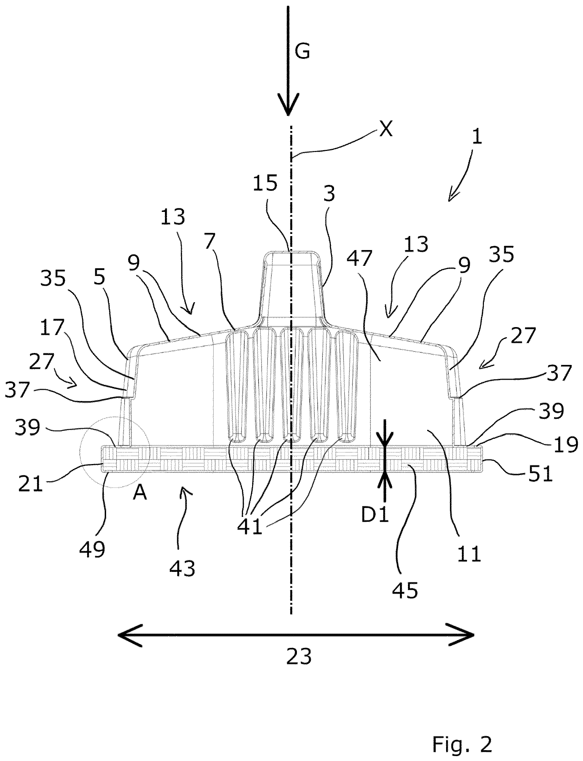

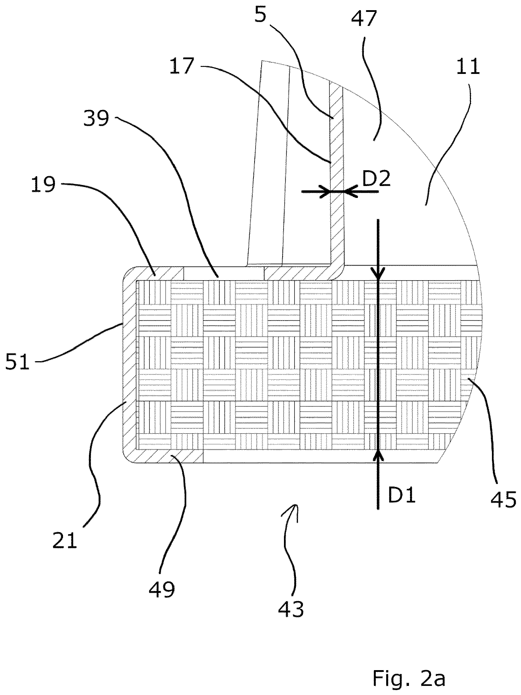

The filter cartridge 1 shown in Figures 1, 2 and 2a comprises a housing 3 formed in a thermoforming process. The housing 3 has a circumferential wall 5 closed at the top by a roof 7. Filter cartridge 1 is gravity operated.

The housing 3 has a generally constant wall thickness D2 of 0.5 mm that only varies slightly due to the thermoforming process.

The roof 7 is provided with several water inlets 9 through which water that is to be treated can enter into an inner volume 11 of the housing 3. The water inlets 9 are thereby located in an upper region of the housing 3 and each have a circular cross section, which may differ in other embodiments, and are arranged in two inlet areas 13 of the roof 7. The inlet areas 13 are divided by a handle 15 of the filter cartridge 1.

The wall 5 is divided top down into a circumferential main portion 17, a circumferential transitional portion 19 and a circumferential sealing portion 21. The sealing portion 21 is thus located below the main portion 17. Each of the three portions 17, 19, 21 extends along a respective closed path around a central axis X of the filter cartridge 1. Thus, each of the three portions 17, 19, 21 is circumferential. The transitional portion 19 connects the main portion 17 and the sealing portion 21. The sealing portion 21 has a larger maximum horizontal cross-section than the main portion 17. Transitional portion 19 provides a transition from the smaller cross-section of main portion 17 to the larger maximum horizontal cross-section of sealing portion 21.

The filter cartridge 1 extends more in a first direction 23 than in a second direction, the directions 23, 25 both being perpendicular to the gravitational direction G and to each other. This way the housing 3 has two narrow ends 27, 29 spaced apart along the first direction 23 and two wider ends 31, 33 spaced apart along the second direction 25. At each narrow end 27, 29 the housing 3 has a groove 35. In that groove the housing 3 is provided with a stacking step 37. The stacking steps 37 ensure that several housings 3 can be stacked during production without being arranged to far inside each other making a later separation of two housings 3 difficult.

The groove 35 also acts as a channel for guiding water towards a supplementary opening 39 located in the transitional portion 19, one at each narrow end 27, 29. Water may enter through the supplementary openings 39 into the inner volume 11 of the filter cartridge 1.

The housing 3 is provided with stiffening ribs 41 at each wider end 31, 33. Said stiffening ribs 41 improve the mechanical stability of the housing 3.

The sealing portion 21 defines a water outlet 43 through which filtered water can exit the filter cartridge 1. Since the sealing portion 21 is the lowest portion of the housing 3, the water outlet 43 is located in a lower region of the housing 3.

A porous coal disc 45 is arranged in said water outlet 43 such that it circumferentially contacts the sealing portion 21 from inside the housing 3. The housing 3 is thereby stiffened against forces coming from outside the filter cartridge 1. The coal disc 45 is a flat disc having a thickness D1 of 6.3 mm. The coal disc 45 also contacts the transitional portion 19 in a contact area, which extends along a closed path around the central axis X, i.e. a circumferential contact area. This way, water entering through the supplementary openings 39 flows directly into the coal disc 45, bypassing the main portion 17.

An upper volume 47 is formed between the coal disc 45 and the roof 7. Said upper volume 47 is further defined by the main portion 17. Besides the active coal present in the coal disc 45 additional water treatment media (not shown) may be located in the upper volume 47, i.e. in the form of ion exchange resin. Water entering the filter cartridge 1 through the water inlets 9 will be filtered by both the iron exchange resin and the coal disc 45 while water entering through the supplementary openings 39 will only be filtered by the active coal present in the coal disc 45.

The sealing portion 21 has a lower rim 49 projecting horizontally inwards. The lower rim 49 holds the coal disc 45 inside the filter cartridge 1. For clarification it is noted that the lower rim 49 does not define the maximum horizontal cross-section of the sealing portion 21. The maximum horizontal cross-section is the area defined by the outline of a portion when said portion is projected along the gravitational direction onto a plane.

The sealing portion 21 is provided with a sealing area 51 located on its outside. The sealing area 51 generally has the shape of the lateral surface of a cylinder.

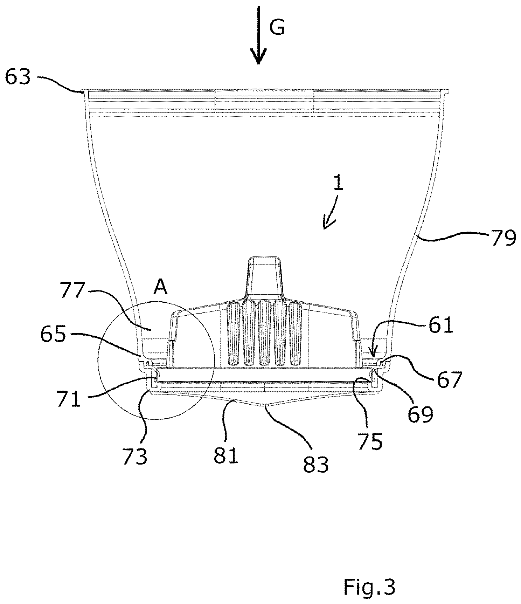

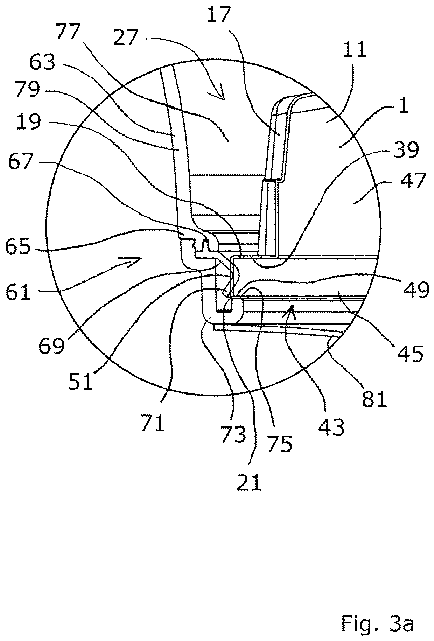

Figures 3 and 3a show the filter cartridge 1 arranged on a seat 61 of an inlet funnel 63 of a water filtration device according to the invention. The inlet funnel 63 has a funnel wall 79, which is provided with a circumferential bottom rim 65 providing a circumferential groove 67. A circumferential sealing ring 69 is arranged in said groove 67. The sealing ring 69 has a sealing lip 71 extending radially inwards. The sealing ring 69 is held in the groove 67 by a clamping ring 73, the clamping ring 73 being connected to the bottom rim 65 by a form fit connection.

The clamping ring 73 provides a seat area 75 on to which the filter cartridge 1 comes to rest with its lower rim 49. This way the seat area 75 provides a mechanical stop for the filter cartridge 1 showing the consumer that the filter cartridge 1 has reached its final position when the filter cartridge is inserted into the inlet funnel 63.

In Figures 3 and 3a, for illustration purposes, the sealing lip 71 is shown in its relaxed position. Actually, during insertion of the filter cartridge 1 into the inlet funnel 63 the sealing lip 71 is deformed radially outwards by the sealing portion 21. As a consequence the sealing lip 71 is pressed against the sealing area 51 of the sealing portion 21 when the filter cartridge 1 has reached its final position.

This provides a reliable seal making sure that no untreated water can reach areas below the inlet funnel 63.

Due to the shape of the housing 3 an annular space 77 is formed between the circumferential wall 5 and a funnel wall 79 of the inlet funnel 63. Since the filter cartridge 1 is gravity-operated water present in said annular space 77 will not be able to enter the housing 3 through the water inlets 9. Nevertheless, said water will be able to enter into the filter cartridge 1 via the supplementary openings 39 so that only a small amount of water, if any at all, will stay in said annular space 77 once the filtration is completed.

The inlet funnel 63 is provided with a throttle plate 81 fixed to the clamping ring 73. Said throttle plate 81 is generally shaped like a funnel having one throttle outlet 83 at its (low) tip. The throttle outlet 83 controls the water flow of the assembly of the filter cartridge 1 and the inlet funnel 63. The throttle outlet 83 allows for a smaller flow rate than the water inlets 9 together with the supplementary openings 39 or the coal disc 45. As a result water flowing through the filter cartridge 1 will be treated longer by the coal disc 45 and the iron exchange resin thereby improving the filtration effect.

### List of references

- 1: filter cartridge
- 3: housing
- 5: wall
- 7: roof
- 9: water inlet

- 11: inner volume
- 13: inlet area
- 15: handle
- 17: main portion
- 19: transitional portion

- 21: sealing portion
- 23: first direction
- 25: second direction
- 27: narrow end
- 29: narrow end

- 31: wider end
- 33: wider end
- 35: groove
- 37: stacking step
- 39: supplementary opening

- 41: stiffening rib
- 43: water outlet
- 45: coal disc
- 47: upper volume
- 49: lower rim

- 51: sealing area

- 61: seat
- 63: inlet funnel
- 65: bottom rim
- 67: groove
- 69: sealing ring

- 71: sealing lip
- 73: clamping ring
- 75: seat area
- 77: annular space
- 79: funnel wall

- 81: throttle plate
- 83: throttle outlet

- D1: thickness
- D2: wall thickness
- G: gravitational direction
- X: central axis

## Claims

1. Water filtration device comprising an inlet funnel (63) with a seat (61) for a filter cartridge (1) and with a gravity-operated filter cartridge (1) for treating water, the filter cartridge (1) having a housing (3) with an inner volume (11) and water treatment media located in the inner volume (11),
the housing (3) having a circumferential wall (5), at least one water inlet (9) in an upper region and at least one water outlet (43) in a lower region, the wall (5) having a circumferential main portion (17) and a circumferential sealing portion (21),
the sealing portion (21) having a larger maximum horizontal cross-section than the main portion (17),
a porous coal disc (45) being located at least partially inside the housing (3), the coal disc (45) circumferentially contacting the sealing portion (21) from inside the housing (3), thereby stiffening the housing (3) against forces coming from outside the housing (3),
a circumferential sealing area (51) being located on the outside of the sealing portion (21),
the seat (61) of the inlet funnel (63) having a circumferential sealing element that is in contact with the circumferential sealing area (51) of the sealing portion (21) when the filter cartridge (1) is inserted into the seat (61) of the inlet funnel (63).

2. Water filtration device according to claim 1,
**characterized in that** the sealing portion (21) is located below the main portion (17).

3. Water filtration device according to claim 1 or 2,
**characterized in that** the wall (5) further has a circumferential transitional portion (19) providing a transition from the maximum horizontal cross-section of the main portion (17) to the cross-section of the sealing portion (21) and **in that** the porous coal disc (45) contacts the transitional portion (19) from inside the housing (3).

4. Water filtration device according to claim 3,
**characterized by** at least one supplementary opening (39) being arranged in the transitional portion (19),

5. Water filtration device according to any of the previous claims,
**characterized in that** the sealing portion (21) of the circumferential wall (5) defines one single water outlet (43), wherein the porous coal disc (45) is arranged in said water outlet (43).

6. Water filtration device according to any of the previous claims,
**characterized in that** the sealing element is formed from a material that is more elastic than the material of the sealing portion (21).

7. Water filtration device according to any of the previous claims,
**characterized in that** the coal disc (45) has a thickness D1 of 2 mm ≤ D1 ≤ 20 mm, in particular 4 mm ≤ D1 ≤ 10 mm.

8. Water filtration device according to any of the previous claims,
**characterized in that** some parts of the housing (3), in particular the wall (9), or the housing (3) overall has a generally constant wall thickness D2.

9. Water filtration device according to any of the previous claims,
**characterized in that** the housing (3) has a wall thickness D2 of 0.2 mm ≤ D2 ≤ 0.9 mm, in particular 0.3 mm ≤ D2 ≤ 0.6 mm.

10. Water filtration device according to any of the previous claims,
**characterized in that** the housing (3) is formed by thermoforming.

11. Water filtration device according to any of the previous claims,
**characterized in that** granular water treatment media, in particular ion exchange resin, is located in an upper volume (47) of the housing (3) formed between a roof (7) of the housing (3) and the coal disc (45).

12. Water filtration device according to any of the previous claims,
**characterized in that** the inlet funnel (63) comprises a bottom rim (65) at which the circumferential sealing element is arranged, the inlet funnel (63) further comprising a clamping ring (73) holding the sealing element to the bottom rim (65).

13. Water filtration device according to any of the previous claims,
**characterized by** a throttle, in particular a throttle plate (81), limiting the flow rate of water flowing out of the inlet funnel (63) at its bottom end.

14. Gravity-operated filter cartridge (1) for a water filtration device having a housing (3) with an inner volume (11) and water treatment media located in the inner volume (11),
the housing (3) having a circumferential wall (5), at least one water inlet (9) in an upper region and at least one water outlet (43) in a lower region, the wall (5) having a circumferential main portion (17) and a circumferential sealing portion (21),
the sealing portion (21) having a larger maximum horizontal cross-section than the main portion (17),
a porous coal disc (45) being located at least partially inside the housing (3), the coal disc (45) circumferentially contacting the sealing portion (21) from inside the housing (3), thereby stiffening the housing (3) against forces coming from outside the housing (3), and
a circumferential sealing area (51) being located on the outside of the sealing portion (21).

15. Method for manufacturing a filter cartridge with the following steps:
- providing a housing (3) having a circumferential wall (5), at least one water inlet (9) in an upper region and at least one water outlet (43) in a lower region, the wall (5) having a circumferential main portion (17) and a circumferential sealing portion (21), the sealing portion (21) having a larger maximum horizontal cross-section than the main portion (17), and a circumferential sealing area (51) being located on the outside of the sealing portion (21),
- manufacturing a porous coal disc (45), and
- arranging the porous coal disc (45) at least partially inside the housing (3) so that the coal disc (45) circumferentially contacts the sealing portion (21) from inside the housing (3), thereby stiffening the housing (3) against forces coming from outside the housing (3).
